# EUROPEAN PATENT APPLICATION

(11) **EP 4 468 149 A1**
(43) Date of publication of application: **27.11.2024**
(21) Application number: 23175373.2
(22) Date of filing: 25.05.2023
(51) Int. Cl.: G06F 9/455, G06F 21/53, G06F 8/75, G06F 9/445

(54) **EXECUTING SOFTWARE APPLICATIONS ON A HARDWARE PLATFORM ASSOCIATED WITH AN APPARATUS AND/OR INDUSTRIAL PLANT**

(71) Applicant: ABB SCHWEIZ AG, 5400 Baden (CH)
(72) Inventor: KOHNHAEUSER, Florian, 64560 Riedstadt (DE); BURGER, Andreas, 76356 Weingarten (DE); HEUSCHKEL, Jens, 64331 Weiterstadt (DE); COPPIK, Nicolas, 64293 Darmstadt (DE)
(74) Representative: Maiwald GmbH

(57) **Abstract**

A method (100) for executing software applications (2, 3) on a hardware platform (1) that is associated with an apparatus and/or an industrial plant, the method (100) comprising the steps of:
• executing (110), on the hardware platform (1), at least one primary application (2) that is essential for the proper functioning and/or network connectivity of the apparatus and/or industrial plant;
• receiving (120) at least one secondary application (3) that is to be executed on the hardware platform (1) concurrently with the primary application (2);
• determining (130), based at least in part on a code analysis and/or behavioral analysis of the secondary application (3), a trustworthiness level (3a) that is indicative of a propensity of the execution of the secondary application (3) interfering with the execution of the primary application (2);
• selecting (140), based at least in part on the determined trustworthiness level (3a), a type (4a) of execution environment (4) for executing the secondary application (3);
• creating (150), on the hardware platform (1), an instance of the execution environment (4) of the selected type (4a); and
• executing (160), in the created execution environment (4), the secondary application (3).

## Description

### FIELD OF THE INVENTION

The invention relates to embedded and edge computing, and in particular to executing user-supplied software applications on a hardware platform alongside applications that are essential for the proper functioning and/or network connectivity of an apparatus and/or industrial plant.

### BACKGROUND

In a large process automation system of an industrial plant, devices produce a lot of data that may be exploited for improving the operation of the industrial plant. For example, the data may be used for remote monitoring of proper operation, root cause analysis of any problems, or energy saving services. These services may be provided by process automation vendors.

The volume of data is typically too large to push into the cloud for use by said digital services. The required bandwidth may be too costly or even unavailable at the site. Therefore, edge devices on the edge between the industrial plant and the outside world are used to analyze and process the data.

There is a desire for the customer to perform work of his own with his data to expand the functionality offered by the process automation vendor. For this, the customer needs to install software applications of his own on the edge device where there is direct access to the needed data. However, opening the edge device to customer-supplied applications carries a risk. A malicious, buggy or misconfigured software application might interfere with the operation of the vendor-supplied application, or even cause the edge device as a whole to become nonfunctional (e.g., by hogging all available system resources).

### OBJECTIVE OF THE INVENTION

It is therefore an objective of the present invention to allow the execution of additional software applications on a hardware platform with a lower propensity of this affecting the functioning of an important primary application running on this hardware platform.

This objective is achieved by a method according to the independent claim. Further advantageous embodiments are detailed in the dependent claims.

### DISCLOSURE OF THE INVENTION

The invention provides a method for executing software applications on a hardware platform that is associated with an apparatus and/or an industrial plant. For example, the hardware platform may be an embedded device of the apparatus and/or industrial plant, a computing system that is dedicated to the control of the apparatus and/or industrial plant, or an edge device between the apparatus and/or industrial plant and the Internet.

In the course of the method, at least one primary application that is essential for the proper functioning and/or network connectivity of the apparatus and/or industrial plant is executed on the hardware platform. Typically, execution of such primary applications is the main purpose of this hardware platform. For example, the primary application may provide one of the mentioned data-driven services to the user of the apparatus and/or industrial plant. The primary application may even be actively engaged in the control of the apparatus and/or industrial plant. Failure of the primary application is disadvantageous for the operation of the apparatus and/or industrial plant. Therefore, the execution of any secondary applications is a nice-to-have, but is under the constraint of not interfering with the execution of the primary application. This is in some way analogous to the launching of picosatellites as a secondary payload in commercial satellite launches. At any single launch event, there is a wide variety of picosatellites from a lot of different entities. But irrespective of which mistakes any one of these entities has made, it must be enforced that the secondary payload does not interfere with the deployment of the primary commercial payload.

At least one secondary application is received. This secondary application is to be executed on the hardware platform concurrently with the primary application. For example, the secondary application may comprise an application with which a plant owner predicts product quality based on the available data from the process. The benefit of such a prediction is that a potential shortfall in quality may be detected well ahead. Countermeasures may then be taken, so that product quality is prevented from dropping so low that product actually has to be discarded.

Based at least in part on a code analysis and/or behavioral analysis of the secondary application, a trustworthiness level of this secondary application is determined. This trustworthiness level is indicative of a propensity of the execution of the secondary application interfering with the execution of the primary application. The trustworthiness level is in some way analogous to a security category that prisoners are allotted when being in-processed into prison. The security category is determined based on, e.g., the behavioral history and indicia such as gang tattoos. It is indicative of the propensity of this prisoner causing trouble or even attempting to escape. In the present context, the term "trustworthiness level" is not to be construed limiting in the sense that it is tied to malicious intent and/or security risks only. Rather, there are other non-security reasons why the execution of the secondary application might interfere with the execution of the primary application. For example, if the secondary application has a memory leak, it might over time hog all system memory and impede proper operation of the primary application.

Based at least in part on the determined trustworthiness level, a type of execution environment for executing the secondary application is selected. In particular, these types of execution environments may differ at least in the degree of isolation from the primary application that the respective execution environments afford. In particular, the degree of isolation is commensurate with the strength of measures for preventing interference with the primary application. Typically, the stronger such a measure is, the more costly it is in terms of system resources and performance overhead.

In this context, interference with execution of the primary application may, in particular, comprise depriving the primary application of hardware resources, network communication, and/or access to data. These types of interference are most frequently caused by resource contention between the secondary application and the primary application, and/or by configuration errors. Of course, a deliberate interaction of the secondary application with the primary application with the goal of impeding proper operation of the latter is interference as well. For example, the secondary application may enter invalid data into an interface exposed by the primary application with the goal of crashing the primary application, or even taking over control of the primary application.

An instance of the execution environment of the selected type is created on the hardware platform. In the created execution environment, the secondary application is executed.

If maximum protection from interference was the only consideration regarding the execution of secondary applications, then the obvious solution would be to give any secondary application the maximum possible isolation from the primary application. But in a real scenario, the resources of the hardware platform are limited. There is not enough to give each and every intended secondary application the best possible isolation from the primary application. Choosing, for each secondary application, an execution environment that is appropriate according to the trustworthiness level allows to fit more secondary applications onto the same hardware platform while at the same time still ensuring the correct functioning of the primary application. At the same time, if a secondary application is executed in a less isolated execution environment, it may run with a higher performance and may be able to avail itself of more features of the hardware platform. For example, not all possible execution environments may give the secondary application access to hardware accelerators, such as a graphics processing unit, GPU.

In the prison analogy explained above, while it would afford the maximum possible protection to the public if all prisoners were locked away in maximum security, the given available hardware platform of prisons does not have the resources for such an approach. Also, it would be exceedingly costly. Therefore, each prisoner is housed in a unit that corresponds to his security category. In particular, prisoners with a lesser propensity to disrupt the order in the prison or even escape are given much more freedom and can even perform some useful work for the prison, such as doing the laundry or kitchen work. Only the few percent real troublemakers need to be locked away in segregation.

In a particularly advantageous embodiment, the selecting of the type of execution environment is further based on a resource availability on the hardware platform. In this manner, if excess resources are available, they may be used to provide the best possible isolation of the secondary application from the primary application. But where a choice has to be made between providing a better isolation for one secondary application and allowing another secondary application to execute, it may be advantageous to elevate an already running secondary application to a better trustworthiness level, meaning that this secondary application can then run with a lesser isolation than previously. This can then free up resources for a further secondary application.

Thus, in a further particularly advantageous embodiment, a type of execution environment with the maximum degree of isolation from the primary application that is possible given the current resource availability on the hardware platform may be chosen. In particular, when the first customer-provided secondary application is to be launched on the hardware platform, there is an inherently increased propensity that this might interfere with the execution of the primary application. For example, the customer may not have experience in how to properly build and configure secondary applications for execution alongside the primary application, so the probability of errors is increased. With increasing experience, configuration errors become less likely.

One particularly lightweight type of execution environment is a container. Containers may be executed in a container engine, such as Docker, or using an orchestration system, such as Kubernetes. A container may be instantiated very quickly and is executed, by the containerization framework, in a native process under the operating system running on the hardware platform. In particular, when executing multiple containers, only very little, if any, overhead is duplicated in every container. Isolation of containers from one another, and from the primary application, is performed primarily by using features of the host operating system running on the hardware platform. For example, the Linux operating system offers kernel namespaces that prevent processes running within one container from directly interacting with processes in another container. Also, under Linux, containers may be executed with reduced "kernel capabilities". This means that, in the event that an application in the container should escalate its privileges to the root user within the container (in response to being taken over by an attacker or because it was malicious in the first place), this limits the damage that can be done to the containerization framework, or to the primary application. However, there are still possibilities to impede the proper operation of the primary application, e.g., by hogging a large amount of resources.

Another exemplary type of execution environment is a user environment that is distinct from the user environment in which the primary application is being executed, and that is provided by an operating system running on the hardware platform. In particular, the primary application may run under one user account of the operating system, and the secondary application may run under another user account. The operating system is designed to be a multi-user system and can therefore prevent the secondary application from directly interacting with the primary application. The operating system may also limit the amount of resource usage by the secondary application, e.g., by means of UNIX "ulimits" and mass storage quotas. Running the secondary application as a normal process directly on the operating system has the advantage that this secondary application can directly avail itself of all resources that the operating system offers. For example, if a GPU has been made available in the operating system once, it is available in all user environments without further configuration work.

A more stringently isolated type of execution environment is a sandbox that is configured to intercept operations with an elevated propensity of interfering with the execution of the primary application. For example, the sandbox may introduce a layer of abstraction between the secondary application and the resources of the hardware platform, so that only resources that are explicitly made available in the sandbox can be accessed. In another example, the secondary application in the sandbox may transparently access all resources that the operating system provides, but all accesses are actively monitored. If an access attempt contravenes a rule in a predetermined ruleset, it is prevented.

An even more stringently isolated type of execution environment is a virtual machine provided by a hypervisor. The hypervisor may run on an operating system that in turn runs on the hardware platform, but it may also run directly on the hardware platform (bare-metal hypervisor). The virtual machine needs a guest operating system to run, and the secondary application runs on this guest operating system. The secondary application does not get to see the real hardware platform; rather, it only gets to see virtual hardware that is mapped to the real hardware, or even completely emulated in software, by the hypervisor. Every additional virtual machine comes with the additional memory overhead of at least another copy of the guest operating system. Also, the secondary application may run slower in the virtual machine than it would run when being directly executed on the hardware platform.

The trustworthiness level is initially computed at the time of launching the secondary application. But this is not set in stone. Rather, in a further particularly advantageous embodiment, the trustworthiness level, and/or the type of execution environment, is re-evaluated during the execution of the secondary application. If the new type of execution environment is different from the type of execution environment in which the secondary application is currently being executed, a new instance of the execution environment of the new type is created. Execution of the secondary application is then moved into this created new instance.

In this manner, the allotting of secondary applications to types of execution environments can be adapted to changing needs. For example, if there is only one single secondary application to execute, then this may be given the best possible isolation from the primary application. But later, there may be a need to execute further secondary applications even if this means having to decrease the level of isolation from the primary application for an already running secondary application.

Thus, for example, the re-evaluating may be triggered by a change in the number of applications, and in particular in the number of secondary applications, to be executed on the hardware platform.

In a further particularly advantageous embodiment, the trustworthiness level, and/or the new type of execution environment, is re-evaluated based at least on part on a current behavior, and/or on a history of the execution of the secondary application, with respect to interference with the primary application. In this manner, the level of isolation from the primary application may be better brought in line with what is actually needed. For example, if a secondary application has functioned for some time without any problems, and without any incidents that would have impeded the functioning of the primary application if they had not been prevented by the isolation in place, then there is no reason why it should suddenly start exhibiting problematic behavior. By contrast, if there have been problems in the past, more problems are to be expected in the future. In the prison analogy given above, a prisoner with a good record is very likely to keep up his good behavior in order to keep and maybe even expand his privileges, whereas a notorious troublemaker may need a withdrawal of some privileges to get him back on track.

Alternatively or in combination to this, the trustworthiness level, and/or the type of execution environment, may be re-evaluated based at least in part on a level of disturbance that a given interference with the execution of the primary application might cause to the correct functioning of the apparatus and/or industrial plant. Not all operating states of the apparatus and/or industrial plant are the same. In particular, an industrial plant may have certain operating states in which interference with execution of the primary application is more critical than in other operating states. For example, in a stationary operating state where only infrequent control actions need to be performed, the plant may well tolerate it if the primary application temporarily hangs and external data-driven services for determining the next to-be-performed control action are temporarily unavailable. By contrast, in an operating state where pressure is building up in a reaction vessel, a temporary loss of control might cause the pressure to climb too high, potentially causing the rupture of a safety burst disk (or the vessel). This is in some way analogous to the effect of distractions on a driver who may perfectly participate in routine road traffic while talking to his passenger, but might inadvertently become a wrong-way driver when talked to by his passenger while navigating a complex freeway intersection.

Therefore, in a further particularly advantageous embodiment, the re-evaluating of the trustworthiness level, and/or of the type of execution environment, is triggered by a change in the level of disturbance to the correct functioning of the apparatus and/or industrial plant that a given interference with the execution of the primary application may cause. For example, the primary application may announce that it is in a critical (or less critical) phase of operation.

In a further particularly advantageous embodiment, the code analysis of the secondary application comprises an analysis of
- a number and/or type of operating system calls, and/or
- types and/or versions of libraries,
used by the secondary application.

In particular, the operating system calls are indicative of how the secondary application intends to interact with other applications, and/or with the resources of the hardware platform. For example, operating system calls (syscalls) are used to allocate and free portions of memory, or to access data on mass storage. Therefore, syscalls are indicative of whether the execution of the secondary application has a potential to impede the proper execution of the primary application.

Types and versions of libraries are indicative of whether the execution of the secondary application is likely to suffer from problems with libraries. In particular, for widely used libraries, it is known that certain versions suffer from bugs. These bugs might cause undesirable behavior of the secondary application because some functionality in the library that it relies on does not work as it should. But bugs might also cause the library to be exploitable with specially crafted user input. For example, a "buffer overflow" vulnerability may allow an attacker to provide user input that hijacks the control flow of the secondary application, allowing the attacker to execute any arbitrary code instead of the secondary application. Even if such vulnerabilities are not yet known for a library, the library can be expected to have them if it is deprecated and no longer being actively maintained.

Thus, in response to determining that a library used by the secondary application has a known security vulnerability or other bug and/or is known to be deprecated, it may be determined that the secondary application has a higher propensity of interfering with the primary application.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

The present disclosure minimizes the risk to deploy malicious, vulnerable, or wrongly configured 3rd party applications on an edge device. In general, the method foresees an edge device that uses some form of micro service architecture realized with containerization to enable the easy and fast deployment of applications. In addition, applications run in isolated environments, which are enabled by virtualization and/or trusted execution environments (TEEs). In general, virtualization is distinguished between two types: (1) OS-level virtualization techniques provide multiple isolated user spaces and a lightweight isolation approach for applications, e.g., using containerization tools like Docker; (2) Hardware virtualization techniques, which are implemented in so-called hypervisors like Hyper-V or Xen, run virtual machines containing an entire operating system and its applications.

Depending on the type of virtualization and TEE, applications can run on different trusted zones (TZ), each offering a varying level of trustworthiness. For instance, containerization (OS-level virtualization) typically provides weaker isolation, thus a lower trustworthiness level, than hypervisors (hardware virtualization). Herein, it is provided a method to calculate the trustworthiness level (TL) of an application and to decide, depending on this level, in which TZ on the edge device the application shall be executed. Therefore, the method performs a 3-step process. In the first step, the application is statically analyzed for an initial assessment of the trustworthiness level, e.g., scanning for vulnerable libraries used by the application, analyzing the number and type of its syscalls, etc. Next, based on the initial TL, it is decided where to deploy the application. The deployment process is done by the deployment component and the decision maker component based on the TL as well as policies the user can define. For the last step, the method includes a runtime trustworthiness monitor, which monitors the application running on the edge device regarding its behavior. In case the application shows suspicious behavior, the runtime trustworthiness monitor can reassess the initial TL and initiate a redeployment in a more isolated TZ if necessary. Additionally, it is also possible that the application behaves unsuspicious, which may lead over a certain amount of time in an increase of TL and hence, a redeployment of the application in a higher trusted zone, if necessary and allowed by the user deployment policies. In case an edge device is not powerful enough to provide all these functionalities, the method can also be partially executed in a cloud environment. In such a case, the application will be statically analyzed to calculate the initial TL and then deployed in a container cluster in the cloud also simulating the control devices. Then the online trustworthiness runtime monitor will monitor the behavior of the application and validate the initial TL. In this case, depending on user deployment policies, redeployment may also move such an application from the cloud to the edge, or vice versa.

The method may be implemented using three different components: the deployment component, the decision maker component, and the runtime trustworthiness monitor.

The deployment component may be executed on the edge device itself and is responsible for deploying the applications on the different trusted zones. The deployment decision will be taken by the decision maker component based on either a runtime assessment of an application or based on a static assessment of the container.

The decision maker component may run on the edge or in the cloud, depending on the available connection and the customer requirements. It takes as input the static and dynamic assessments and calculates the trustworthiness level (TL) of the 3rd party application. Note that the TL is periodically recalculated by repeating static and dynamic assessments, since information about new security vulnerabilities and changing application behavior can impact the TL, anytime. To decide where to deploy the 3rd party application, the decision maker component also considers the TL and trusted zone (TZ) of already deployed other applications. Application with different TLs should be deployed in distinct TZs where lower TLs result in TZs that provide more isolation and are more resource restricted. Finally, the decision maker either deploys the containerized application in the container runtime via the container orchestration service or deploys/keeps the application in the more isolated zone on the edge device, if the edge device has such an isolated zone. If such a zone does not exist, the decision maker refuses to deploy the application based on the low trustworthiness level.

The trustworthiness monitor contains the functionality for the static and the dynamic trustworthiness assessment of the application. The static trustworthiness assessment component includes a scanner that analyzes containerized application and especially checks them for known security vulnerabilities (e.g., in software libraries) or misconfigurations. Additionally, the static assessment component analyzes the application's resource usage (by analyzing the deployment parameters of the application), and the number and type of syscalls. In addition, the user can optionally provide trust information about the application. Based on all this input, an initial static trustworthiness level is calculated. Then, the application is deployed in a restricted sandbox either on the device itself or in the cloud simulating the control devices the application might need access to. Having realized this initial restricted deployment, the runtime trustworthiness component starts to monitor the behavior of the application by checking the dynamic resource usage, the network traffic, used syscalls, etc. After a given amount of time, the runtime trustworthiness monitor calculates a runtime trustworthiness level based on the behavior of the application. Suspicious behavior like scanning the network, burning CPU cycles, high usage of RAM, or accessing system files, lead to a lower runtime trustworthiness level, which then can lead to a redeployment in a more restricted TZ.

### DESCRIPTION OF THE FIGURES

In the following, the invention is illustrated using Figures without any intention to limit the scope of the invention. The Figures show:
Figure 1: Exemplary flow chart of the method 100 for executing software applications on a hardware platform;
Figure 2: Exemplary implementation of the method 100 on an edge device 10;
Figure 3: Exemplary implementation of the method 100 using an edge device 10 as well as a cloud service 20;
Figure 4: Exemplary assignment of different execution environments 4 to two different secondary applications 31 and 32.

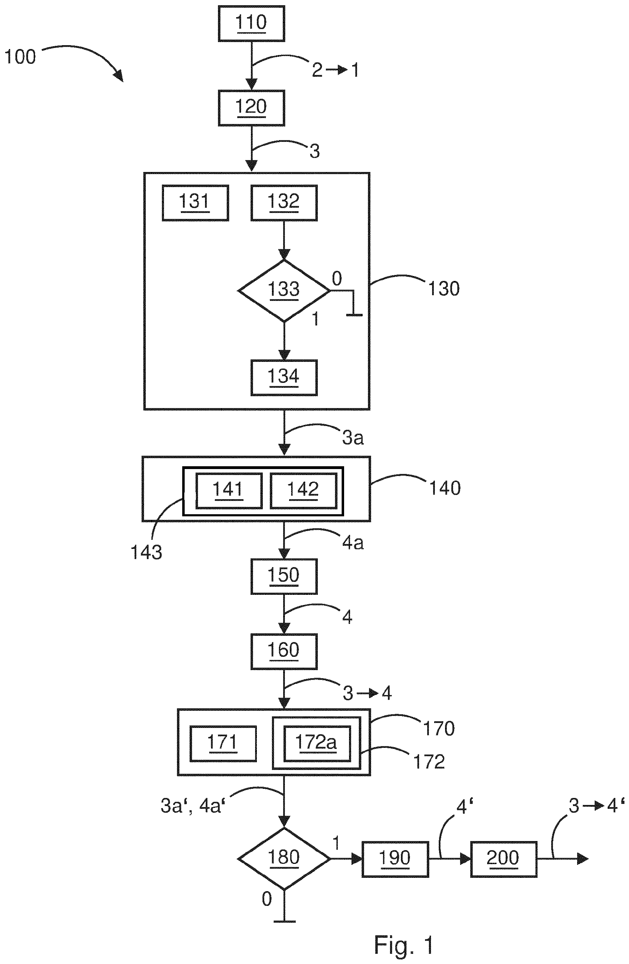

Figure 1 is a schematic flow chart of an embodiment of the method 100 for executing software applications 2, 3 on a hardware platform 1 that is associated with an apparatus and/or an industrial plant.

In step 110, at least one primary application 2 that is essential for the proper functioning and/or network connectivity of the apparatus and/or industrial plant is executed on the hardware platform 1.

In step 120, at least one secondary application 3 is received. This secondary application 3 is to be executed on the hardware platform 1 concurrently with the primary application 2.

In step 130, based at least in part on a code analysis and/or behavioral analysis of the secondary application 3, a trustworthiness level 3a that is indicative of a propensity of the execution of the secondary application 3 interfering with the execution of the primary application 2 is determined. The trustworthiness level 3a may be determined on-site, but it may also, for example, be determined by a cloud service. For example, such a cloud service may be provided by the process automation vendor who provided the primary application 2.

According to block 131, interference with execution of the primary application 2 may comprise depriving the primary application 2 of hardware resources, network communication, and/or access to data.

According to block 132, the code analysis may comprise
- a number and/or type of operating system calls, and/or
- types and/or versions of libraries,
used by the secondary application 3.

According to block 133, it may be checked whether a library used by the secondary application 3 has a known security vulnerability or other bug and/or is known to be deprecated. If this is the case (truth value 1), according to block 134, it may be determined that that the secondary application 3 has a higher propensity of interfering with the primary application 2.

In step 140, based at least in part on the determined trustworthiness level 3a, a type 4a of execution environment 4 for executing the secondary application 3 is selected.

According to block 141, the types 4a of execution environments may differ at least in the degree of isolation from the primary application 2 that the respective execution environments 4 afford.

According to block 142, the selecting of the type of execution environment may be further based on a resource availability on the hardware platform 1.

According to block 143, a type 4a of execution environment 4 with the maximum degree of isolation from the primary application 2 that is possible given the current resource availability on the hardware platform 1 may be chosen.

In step 150, an instance of the execution environment 4 of the selected type 4a is created on the hardware platform 1.

In step 160, the secondary application 3 is executed in the created execution environment.

In the example shown in Figure 1, in step 170, the trustworthiness level 3a, and/or the type 4a of execution environment 4, is re-evaluated during the execution of the secondary application 3.

According to block 171, the re-evaluating may be triggered by a change in the number of applications 2, 3 to be executed on the hardware platform 1.

According to block 172, the trustworthiness level 3a, and/or the type 4a of execution environment 4, may be re-evaluated based at least on part on:
- a current behavior and/or history of the execution of the secondary application 3 with respect to interference with the primary application 2, and/or
- a level of disturbance that a given interference with the execution of the primary application 2 might cause to the correct functioning of the apparatus and/or industrial plant.

The result of the re-evaluation is a new trustworthiness level 3a', and/or a new type 4a' of execution environment 4.

According to block 172a, the re-evaluating may be triggered by a change in said level of disturbance.

In step 180, it is checked whether the new type 4a' of execution environment 4 is different from the type 4a of execution environment 4 in which the secondary application 3 is currently being executed. If this is the case (truth value 1), in step 190, a new instance of the execution environment 4' of the new type 4a' is created. Then, in step 200, execution of the secondary application 3 is moved into this created new instance 4'.

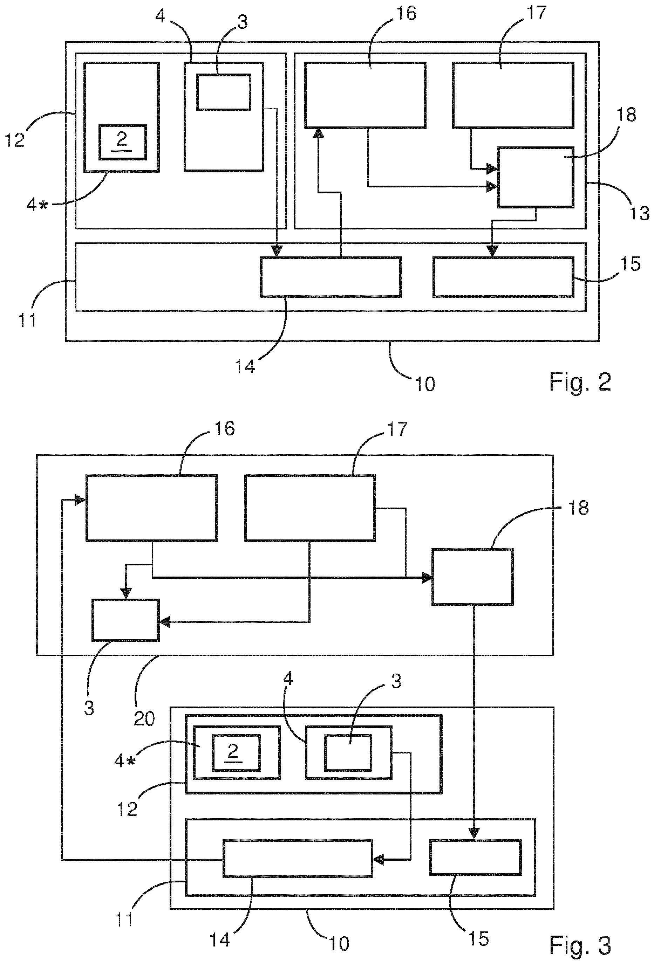

Figure 2 illustrates an exemplary implementation of the method 100 on an edge device 10. The edge device 10 houses a container orchestration framework 11, a container runtime 12, and a sandbox virtual machine 13 that is isolated both from the container orchestration framework 11 and from the container runtime 12.

In the state shown in Figure 1, in the container runtime 12, a first execution environment 4* for executing the primary application 2 and a second execution environment 4 for executing the secondary application 3 have been created.

This is the result of the work inside the sandbox virtual machine 13. Based on the outcome of a static trustworthiness assessment module 17, and a runtime trustworthiness assessment module 16, a decision maker 18 has decided that the execution environments 4*, 4 be set up and used for applications 2 and 3, respectively. The actual work of setting these execution environments 4*, 4 up has been performed by the deployment mechanism 15. The runtime trustworthiness assessment module 16 gets constant feedback about the execution of the secondary application 3 from the runtime monitoring module 13.

Figure 3 illustrate another exemplary implementation of the method 100. In contrast to Figure 2, the work that was previously done in the sandbox virtual machine 13 on the edge device 10 has been moved to a cloud service 20. That is, decisions as to which execution environments shall be set up and execute which applications are received from the cloud service 20, whereas the monitoring results obtained using the runtime monitoring module 14 are provided to the cloud service 20.

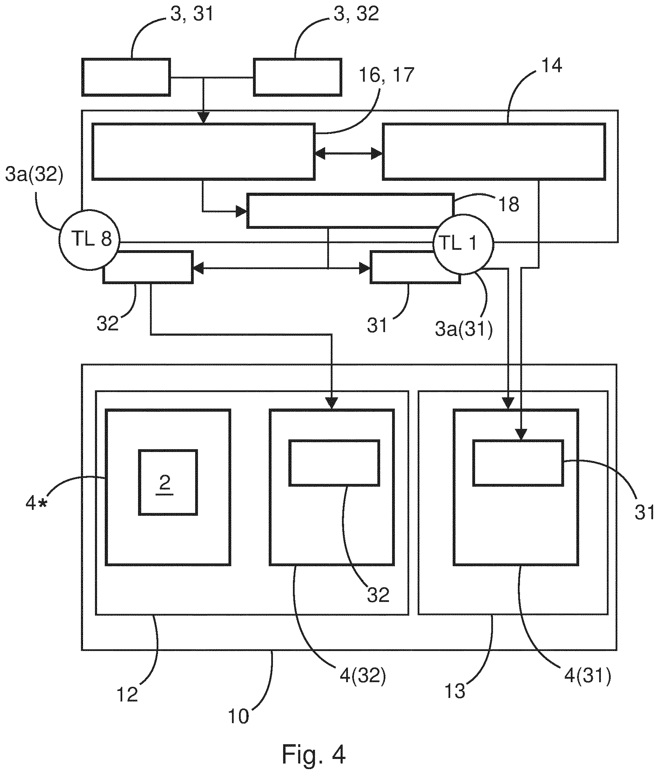

Figure 4 illustrates on one example how different execution environments 4 may be assigned to two different secondary applications 31 and 32.

In the example shown in Figure 4, the runtime and static trustworthiness assessment modules 16, 17, as well as the decision maker 18, work as before. For the two exemplary secondary applications 31, 32, the result is that they are assigned very different trustworthiness levels 3a(31) and 3a(32).

The first application 31 gets a very low trustworthiness level 3a(31), labelled "TL 1". Consequently, it is assigned a sandbox virtual machine as execution environment 4(31). This execution environment 4(31) is heavily shielded from the execution environment 4* of the primary application 2.

The second application 32 gets a very high trustworthiness level 3a(32), labelled "TL 2". Consequently, it is assigned a namespace as execution environment 4(32). This namespace sits in the same container runtime 12 as the namespace 4* of the primary application 2, meaning it is only weakly shielded from that namespace 4*.

### List of reference signs:

- 1: hardware platform
- 2: primary application
- 3, 31, 32: secondary applications
- 3a: trust level of secondary application 3
- 4: execution environment for secondary application 3
- 4': new execution environment after re-evaluation
- 4*: execution environment for primary application 2
- 4a: type of execution environment
- 4a': new type of execution environment
- 10: edge device
- 11: container orchestration framework
- 12: container runtime
- 13: sandbox virtual machine
- 14: runtime monitoring module
- 15: deployment mechanism
- 16: runtime trustworthiness assessment module
- 17: static trustworthiness assessment module
- 18: decision maker
- 20: cloud service
- 100: method for executing software applications 2, 3
- 110: executing primary application 2
- 120: receiving secondary application 3
- 130: determining trustworthiness level 3a
- 131: special types of interference
- 132: special types of code analysis
- 133: checking for vulnerable and/or deprecated libraries
- 134: determining higher propensity for interference
- 140: selecting type 4a of execution environment 4
- 141: using types 4a with different degrees of isolation
- 142: selecting based on resource availability
- 143: selecting maximum possible isolation given resource availability
- 150: creating instance of execution environment 4
- 160: executing secondary application 3 in execution environment 4
- 170: re-evaluating trustworthiness level 3a, type 4a
- 171: triggering re-evaluating based on number of applications 2, 3
- 172: re-evaluating based on behavior and/or criticality of situation
- 172a: triggering re-evaluating based on change of criticality
- 180: checking whether new type 4a' different
- 190: creating execution environment 4' instance of new type 4a'
- 200: moving secondary application 3 to new execution environment 4'

## Claims

1. A method (100) for executing software applications (2, 3) on a hardware platform (1) that is associated with an apparatus and/or an industrial plant, the method (100) comprising the steps of:
• executing (110), on the hardware platform (1), at least one primary application (2) that is essential for the proper functioning and/or network connectivity of the apparatus and/or industrial plant;
• receiving (120) at least one secondary application (3) that is to be executed on the hardware platform (1) concurrently with the primary application (2);
• determining (130), based at least in part on a code analysis and/or behavioral analysis of the secondary application (3), a trustworthiness level (3a) that is indicative of a propensity of the execution of the secondary application (3) interfering with the execution of the primary application (2);
• selecting (140), based at least in part on the determined trustworthiness level (3a), a type (4a) of execution environment (4) for executing the secondary application (3);
• creating (150), on the hardware platform (1), an instance of the execution environment (4) of the selected type (4a); and
• executing (160), in the created execution environment (4), the secondary application (3).

2. The method (100) of claim 1, wherein the types (4a) of execution environments differ (141) at least in the degree of isolation from the primary application (2) that the respective execution environments (4) afford.

3. The method (100) of any one of claims 1 to 2, wherein the selecting of the type of execution environment is further based (142) on a resource availability on the hardware platform (1).

4. The method (100) of claims 2 and 3, wherein a type (4a) of execution environment (4) with the maximum degree of isolation from the primary application (2) that is possible given the current resource availability on the hardware platform (1) is chosen (143).

5. The method (100) of any one of claims 1 to 4, wherein the types (4a) of execution environments (4) comprise one or more of:
• a container;
• a user environment that is distinct from the user environment in which the primary application is being executed, and that is provided by an operating system running on the hardware platform;
• a sandbox that is configured to intercept operations with an elevated propensity of interfering with the execution of the primary application;
• a virtual machine provided by a hypervisor that is running on the hardware platform, and/or on an operating system running on the hardware platform.

6. The method (100) of any one of claims 1 to 5, wherein interference with execution of the primary application (2) comprises (131) depriving the primary application (2) of hardware resources, network communication, and/or access to data.

7. The method (100) of any one of claims 1 to 6, further comprising:
• re-evaluating (170) the trustworthiness level (3a), and/or the type (4a) of execution environment (4), during the execution of the secondary application (3), and if the new type (4a') of execution environment (4) is different (180) from the type (4a) of execution environment (4) in which the secondary application (3) is currently being executed:
• creating (190) a new instance of the execution environment (4') of the new type (4a'); and
• moving (200) execution of the secondary application (3) into this created new instance (4').

8. The method (100) of claim 7, wherein the re-evaluating is triggered (171) by a change in the number of applications (2, 3) to be executed on the hardware platform (1).

9. The method (100) of any one of claims 7 to 8, wherein the trustworthiness level (3a), and/or the type (4a) of execution environment (4), is re-evaluated (172) based at least on part on:
• a current behavior and/or history of the execution of the secondary application (3) with respect to interference with the primary application (2), and/or
• a level of disturbance that a given interference with the execution of the primary application (2) might cause to the correct functioning of the apparatus and/or industrial plant.

10. The method (100) of claim 9, wherein the re-evaluating is triggered (172a) by a change in said level of disturbance.

11. The method (100) of any one of claims 1 to 10, wherein the code analysis comprises (132) an analysis of
• a number and/or type of operating system calls, and/or
• types and/or versions of libraries,
used by the second application (3).

12. The method (100) of claim 11, wherein, in response to determining (133) that a library used by the secondary application (3) has a known security vulnerability or other bug and/or is known to be deprecated, determining (134) that the secondary application (3) has a higher propensity of interfering with the primary application (2).

13. A computer program, comprising machine-readable instructions that, when executed on one or more computers and/or compute instances, cause the one or more computers and/or compute instances to perform the method (100) of any one of claims 1 to 12.

14. A non-transitory machine-readable storage medium, and/or a download product, with the computer program of claim 13.

15. One or more computers and/or compute instances with the computer program of claim 13, and/or with the machine-readable storage medium and/or download product of claim 14.
